# EUROPEAN PATENT SPECIFICATION

(11) **EP 4 170 827 B1**
(45) Date of publication and mention of the grant of the patent: **26.11.2025**
(21) Application number: 21841593.3
(22) Date of filing: 08.06.2021
(51) Int. Cl.: H01R 13/432, H01R 13/74, H01R 12/71, B25B 13/48, H02S 40/34, H01R 12/70, H01R 12/58, H01R 13/52

(54) **CONNECTOR AND ELECTRONIC DEVICE**
VERBINDER UND ELEKTRONISCHE VORRICHTUNG
CONNECTEUR ET DISPOSITIF ÉLECTRONIQUE

(30) Priority: 13.07.2020 CN 202010670864
(43) Date of publication of application: 26.04.2023
(73) Proprietor: Huawei Digital Power Technologies Co., Ltd., Shenzhen, Guangdong 518043 (CN)
(72) Inventor: ZHANG, Xiufeng, Shenzhen, Guangdong 518129 (CN); GAO, Yongbing, Shenzhen, Guangdong 518129 (CN); LI, Maofan, Shenzhen, Guangdong 518129 (CN); DENG, Xuedong, Shenzhen, Guangdong 518129 (CN); CHEN, He, Shenzhen, Guangdong 518129 (CN)
(74) Representative: Isarpatent
(86) International application number: PCT/CN2021/099009
(87) International publication number: WO 2022/012230

(56) References cited:
- WO-A1-2014/092144
- WO-A1-2019/072662
- CH-A1- 705 665
- CN-A- 105 281 115
- CN-A- 109 962 368
- CN-A- 111 244 670
- CN-A- 112 003 051
- CN-B- 103 050 559
- CN-U- 201 565 873
- CN-U- 207 509 103
- CN-U- 208 240 908
- CN-Y- 201 234 037
- DE-A1- 102009 056 714
- DE-A1- 102011 112 283
- DE-A1- 102012 014 695
- DE-U1- 29 509 854
- DE-U1- 29 605 985
- JP-A- 2013 157 175
- JP-B2- 5 562 157
- US-A1- 2015 104 965
- US-A1- 2017 110 224

## Description

### TECHNICAL FIELD

This disclosure relates to the field of connector technologies, and the invention in particular to a connector easy to mount, and an electronic device.

### BACKGROUND

Connectors are widely used in electronic devices, to enable two or more electronic devices to be electrically connected. For purposes such as quick disassembly and assembly, connectors are generally used in pairs. For example, in a photovoltaic system, electric energy of a photovoltaic battery needs to be transmitted to an inverter, to implement current inversion, and provide the electric energy for a terminal user or a power grid. A male connector may be mounted at the photovoltaic battery end, and a female connector may be mounted at the inverter end. After the male connector is connected to the female connector, the photovoltaic battery may be electrically connected to the inverter. In actual application, at the inverter end, a conductive core of the connector is electrically connected to a circuit board inside the inverter by using a cable. Because the cable needs to be electrically connected to both the conductive core and the circuit board, mounting steps are complex, and a problem of connection reliability is easy to occur.

DE 10 2009 056 714 A1 discloses a device has a cable receiving device including a splitting element for separating and fixing a cable. A pierce contact (4) is fastened in a cylindrical-shaped contact carrier (5) i.e. wall bushing. Contacting of the cables is produced by penetration of the pierce contact into a wire of the cable. A connection contact (2) and the pierce contact are designed as a common element. A connecting nut connects the receiving device and the carrier by screwing. A cable receiving housing includes a sealing element, which simultaneously guides and stress-relieves the cable within the receiving device.

WO 2014/092144 A1 discloses a structure for preventing mis-insertion among connectors when attaching a plurality of panel mount connectors respectively to a plurality of attachment holes. The outer peripheral surface end side of the attachment hole side of each panel mount connector provided with an elastic locking piece has a step section formed protruding upwards in a manner so as to prevent the disengagement of the protruding section of the locking piece, a passage groove for allowing the passage of the step section is formed at the attachment holes, the step section of one panel mount connector and the step section of another panel mount connector are formed in a manner so as to have different sizes and shapes, and the passage groove in the attachment hole for the one panel mount connector and the passage groove in the attachment hole for the other panel mount connector are formed in a manner so as to have different sizes and shapes, and thereby the mis-insertion among a plurality of connectors is prevented.

JP 2013-157175 A addresses the problem of how to lighten an assembling work, in a connector structure for a photovoltaic power generation system, by resolving the problem that it takes much efforts to the assembling work and that the number of components becomes large because of screwing to a housing attachment hole. As solution, it is suggested: A connector structure for a photovoltaic power generation system comprises: a connector 4 for a substrate having a connection part with a bayonet lock structure mounted on a printed board 3 inside a housing 2 and arranged facing an attachment hole; a connector 5 for a panel having a connection part 5a arranged so as to be opposed to the attachment hole outside the housing and inserted into the attachment hole to be connected with the connection part of the bayonet lock structure of the connector for a substrate in a complementary manner; and a waterproofing packing intervening between an outer peripheral surface of the attachment hole part in the housing and a flange 5b for attachment of the connector for a panel. One connection part of the bayonet lock structure is provided with two grooves that are engraved on a cylinder for fitting in a circumferential direction and provided in a front and rear direction that is an inserting and drawing-out direction, and the other connection part of the bayonet lock structure is a projection protrusively provided on a surrounding wall surface for fitting and fitted with the groove.

CH 705665 A1, on which the preamble of claim 1 is based, discloses a connector assembly having a fixed female connector comprising a single-phase metal contact socket for electrically conductive connection to a metal plug of the male end section. The contact socket comprises a contact lug for electrically conductive connection with a circuit board by soldering or press fitting. The housing comprises a mounting unit/fastening unit for mounting/fastening the female connector or metal plug of the male end section on circuit board perpendicular to panel of control box. Independent claims are included for the following: control box; and method for mechanically separating control box of photovoltaic system.

DE 296 05 985 U1 discloses an electrical connector device designed specifically for connecting cables to circuit boards that are mounted behind a support wall. The electrical connector has a base and an accompanying plug extension, both made of electrically insulating material. These components are penetrated by conductive pins that form internal and external connection contacts. A base has at least two protruding feet with predetermined breaking points, which allows adjustment for two different installation heights without the need for complex manipulation or customization of the device. The predetermined breaking points can be broken off to adapt to specific installation requirements, thereby simplifying the installation process and accommodating different distances between the support wall and a circuit board.

### SUMMARY

The object of the present invention is to provide a connector that is conducive to improving mounting convenience and a mounting effect, and an electronic device that has the connector.. This object is solved by the attached independent claim 1 and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to an aspect according to the invention, the invention provides a connector, including a housing, a conductive core, and a fastening structure. The housing has a channel that passes through a first end and a second end of the housing. The conductive core is disposed in the channel. A solder leg is disposed on one end of the conductive core, and the solder leg protrudes from the first end of the housing. The housing is fastened to a panel by using the fastening structure. According to the connector provided in this application, the conductive core may be directly soldered to a circuit board, so that a connection effect between the conductive core and the circuit board can be improved, and mounting steps can be reduced.

In specific configuration, the fastening structure may be a nut and a shoulder. Specifically, an external thread and the shoulder may be disposed on an outer peripheral surface of the housing, and the nut may be sleeved on an outer periphery of the housing and thread-connected to the external thread. When the nut is tightened, the nut may gradually move in a direction of the housing panel, so that the housing panel is clamped and fastened between the nut and the shoulder.

To rotate the nut well, an operator may rotate the nut by using a tool. Specifically, a protrusion or a groove is disposed on the tool, a groove or a protrusion is disposed on an end face of the nut, and the end face is an end face that faces away from the shoulder. The protrusion or the groove on the tool is configured to be inserted into the groove or the protrusion on the nut. The operator may rotate the nut by rotating the tool. Because the foregoing groove or protrusion structure is disposed on the end face of the nut, the tool can rotate the nut by acting on the nut from one end of the nut. Therefore, when a plurality of connectors are disposed, a distance between adjacent connectors may be reduced as much as possible. In other words, operation space used to rotate the nut does not need to be reserved between the adjacent connectors, to facilitate a compact layout of the connectors.

In specific configuration, the tool may be of a cylindrical structure, and the protrusion or the groove on the tool may be disposed on one end face of the cylindrical structure.

In addition, in actual application, space inside an electronic device may be limited. Therefore, for ease of mounting, the nut is farther away from the first end of the housing than the shoulder. Specifically, the first end of the housing and the shoulder are both located inside (or an inner side of the housing panel) the electronic device, and the nut is located outside (or an outer side of the housing panel) the electronic device. The nut may be mounted on the housing of the connector from the outside of the electronic device, so that the tool can have large operation space in a process of mounting the nut.

To improve relative stability between the tool and the nut, a plurality of grooves or protrusions may be disposed on the nut, and the plurality of grooves or protrusions may be evenly distributed around an axis of the nut. Correspondingly, a plurality of protrusions or grooves may also be correspondingly disposed on the tool, and the plurality of protrusions or grooves may also be evenly distributed around an axis of the tool.

In addition, to improve stability existing when the shoulder abuts against the housing panel, the shoulder may be configured as a flange that extends around the outer periphery of the housing.

According to a not claimed implementation, a sealing ring may be further disposed between the shoulder and the housing panel. When the connector is mounted on the housing panel, the sealing ring is tightly clamped between the shoulder and the housing panel, so that tightness between the connector and the housing panel can be improved.

To improve connection stability between the connector and the circuit board, a positioning rod may be disposed on an end face of the first end of the housing. Correspondingly, a positioning hole may be disposed on the circuit board, and the positioning rod may be inserted into the positioning hole, to avoid a radial (a direction perpendicular to a central axis of the positioning hole) position offset between the circuit board and the connector. Based on the foregoing connection manner of the positioning rod and the positioning hole, connection strength between the connector and the electronic device may be effectively improved, and stress exerted by the circuit board on the solder leg can be further shared. Therefore, connection stability between the conductive core and the circuit board is effectively ensured, and looseness or mutual detachment between the solder leg and the circuit board is avoided. In specific configuration, the positioning rod and the positioning hole may be assembled by using an interference fit, to improve connection stability between the housing and the circuit board. In addition, a quantity of positioning rods and a quantity of positioning holes may be adaptively adjusted based on an actual requirement. This is not limited in this application.

In addition, to improve connection reliability between the connector and the electronic device, the conductive core is slidably disposed in the channel. In other words, the conductive core may axially slide a preset distance relative to the housing, and the distance may be used to compensate for a mounting error that is generated when the connector is mounted on the electronic device. Specifically, when a dimension error occurs in any one part in the housing panel, the housing of the connector, the circuit board, and the conductive core, the distance may be used to compensate for the dimension error, so that a fault tolerance rate and mounting reliability of the foregoing part during manufacturing and assembly can be improved.

In actual application, the connector not only needs to be connected to the electronic device, but also needs to be electrically connected to another electronic device or a cable, so that the electronic device and the another electronic device or the cable are connected. To implement a quick connection, a connector (an external connector) that is configured to adapt to the connector may also be disposed on the another electronic device or the cable.

To enable the connector to be connected to the external connector, a first connection portion may be disposed on the housing of the connector in this application. In specific configuration, the first connection portion may be a structure such as a snap hook or a snap hole. Specifically, when the external connector has a snap hook structure, a snap hole that is configured to be clamped with the snap hook structure may be disposed on the housing of the connector in this application. Correspondingly, when the external connector has a snap hole structure, a snap hook that is configured to be clamped with the snap hole structure may be disposed on the housing of the connector in this application. It may be understood that, in specific configuration, a specific structural type of the first connection portion is not limited to the snap hook or the snap hole.

In addition, to enable to the connector to be electrically connected to the external connector, the conductive core in this application further includes a second connection portion, and the second connection portion is configured to be connected to a conductive structure of the external connector, so that the connector and the external connector are conductively connected.

In a specific implementation, after the conductive structure of the external connector is connected to the second connection portion, the conductive core may be subjected to large force. To prevent the force from being transmitted to the solder leg and therefore affecting connection reliability between the solder leg and the circuit board, a flexible portion is further disposed between the second connection portion and the solder leg. After the second connection portion is subjected to force of the external connector (specifically, the conductive structure of the connector), the flexible portion may buffer or weaken, through deformation of the flexible portion, the force that is transmitted to the solder leg, so that connection reliability between the solder leg and the circuit board can be improved.

According to another aspect according to the invention, the invention further provides an electronic device, including a housing panel and a circuit board, and further including the foregoing connector. A through hole is disposed on the housing panel, and a housing of the connector passes through the through hole. The circuit board and a first end of the housing of the connector are located on a same side of the housing panel, and a second end of the housing is located on the other side of the housing panel.

In actual application, the electronic device may have various specific types. For example, the electronic device may be an inverter, a cabinet, or the like. The inverter is used as an example. The inverter is a converter that converts direct current power into constant-frequency and constant-voltage or variable-frequency and variable-voltage alternating current power. The inverter may include a functional circuit such as a filter circuit, a measurement circuit, and an inverter circuit, and the foregoing functional circuit may be integrated into the circuit board. When the inverter is applied to a photovoltaic system, the circuit board of the inverter may be electrically connected to a photovoltaic battery in the photovoltaic system by using the connector. Direct current power in the photovoltaic battery may be processed by using the functional circuit such as a filter circuit, a measurement circuit, and an inverter circuit that are integrated into the circuit board, so that the direct current power is converted into alternating current power, and the alternating current power is transferred to a user end or a power grid.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Hereinafter, in the description of the embodiments of the invention, even if features designated above as "according to the invention" are described in connection with the words "can" or "may" or any other optional wording, it should be understood that such features are not optional but actually define the features belong to the invention.

### BRIEF DESCRIPTION OF DRAWINGS

FIG. 1 is a schematic diagram of assembly between a connector and an inverter according to an embodiment of this application;
FIG. 2 is a schematic diagram of a three-dimensional structure of a connector according to an embodiment of this application;
FIG. 3 is a schematic diagram of a cross-sectional structure of a connector that is assembled to an electronic device according to an embodiment of this application;
FIG. 4 is a schematic diagram of a cross-sectional structure of a connector in an exploded state according to an embodiment of this application;
FIG. 5 is a schematic diagram of three-dimensional structures of a connector and a tool according to an embodiment of this application;
FIG. 6 is a schematic diagram of a three-dimensional structure of an electronic device according to an embodiment of this application.
FIG. 7 is a schematic diagram of assembly between a connector and a cable according to an embodiment of this application;
FIG. 8 is a schematic diagram of a three-dimensional structure of another connector according to an embodiment of this application;
FIG. 9 is a top view of an electronic device according to an embodiment of this application;
FIG. 10 is a schematic diagram of an exploded structure of an electronic device according to an embodiment of this application; and
FIG. 11 is a schematic diagram of an exploded structure of another electronic device according to an embodiment of this application.

### DESCRIPTION OF EMBODIMENTS

To make objectives, technical solutions, and advantages of this application clearer, the following further describes this application in detail with reference to the accompanying drawings.

To facilitate understanding of a connector provided in embodiments of this application, the following first describes an application scenario of the connector.

A connector provided in this application may be applied to a plurality of electronic devices, to enable the electronic device and another electronic device or an external cable to be electrically connected. An example in which the electronic device is an inverter is used. The inverter is a converter that converts direct current power into constant-frequency and constant-voltage or variable-frequency and variable-voltage alternating current power. The inverter may be applied to a photovoltaic system, to convert direct current power in a photovoltaic battery into alternating current power.

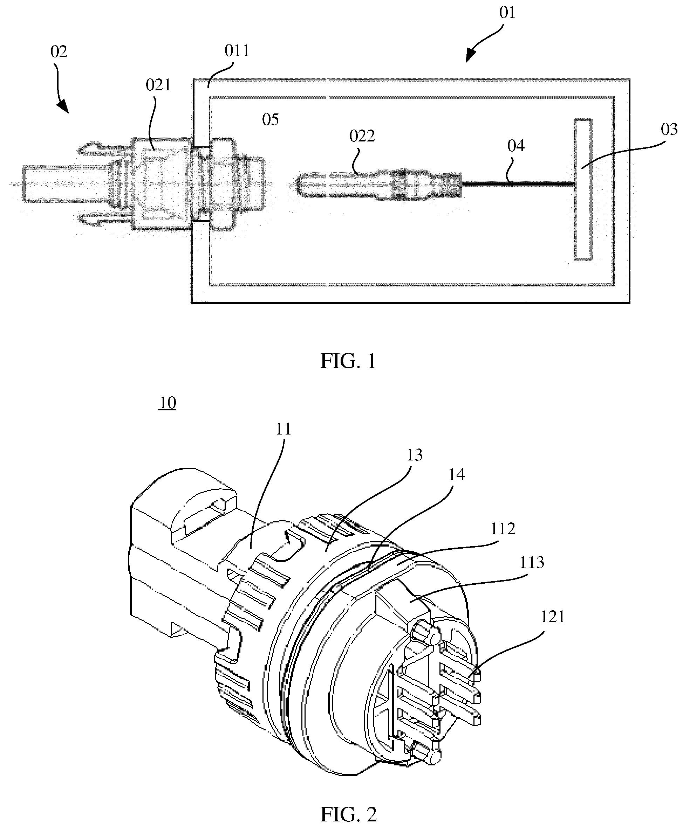

As shown in FIG. 1, to facilitate an electrical connection between an inverter 01 and a photovoltaic battery (not shown in the figure), a connector 02 may be mounted on a housing panel 011 of the inverter 01, and a photovoltaic string cable of the photovoltaic battery may be connected to the connector 02 (specifically, a connector that is configured to be connected to the connector 02 may be disposed on the photovoltaic string cable). A functional circuit 03 such as a filter circuit, a measurement circuit, and an inverter circuit may be mounted inside the inverter 01. One end of the connector 02 is electrically connected to the functional circuit 03 by using a cable 04, and the other end of the connector 02 may be connected to the photovoltaic string cable. Direct current power in the photovoltaic battery is supplied to the functional circuit 03 inside the inverter 01 after the direct current power passes through the photovoltaic string cable and the connector 02. The functional circuit 03 performs processing such as filtering, measurement, and inversion on the direct current power, and finally outputs alternating current power.

In actual application, the connector 02 not only needs to have reliable electrical connection performance and dust-proof and water-proof performance, but also needs to have good mountability.

Currently, in terms of an electrical connection, there are many mountability problems between a conductive structure in the connector 02 and the functional circuit 03 in the inverter 01. Briefly, the functional circuit 03 such as a filter circuit, a measurement circuit, and an inverter circuit inside the inverter 01 is generally integrated into and mounted on a circuit board (for example, a printed circuit board), and the connector 02 is generally electrically connected to the functional circuit 03 by using the cable 04. Specifically, the connector 02 includes a housing 021 and a conductive core 022 (the conductive core 022 and the housing 021 are separated in the figure) that is disposed inside the housing 021. During mounting, the conductive core 022 needs to be crimped to the left end of the cable 04 (for example, the conductive core 022 and the cable 04 are tightly crimped by using a crimping tool, so that the conductive core 022 and the cable 04 are electrically and fixedly connected). The right end of the cable 04 is connected to the circuit board by using a connection terminal (for example, an OT terminal, also referred to as a circular cold-pressed terminal), so that the connector 02 and the circuit board are electrically connected. In the foregoing mounting process, the connector 02 and the functional circuit 03 can be electrically connected only by using the connection terminal and a crimping process. As a result, there are a large quantity of mounting processes, and it is not conducive to improving mounting efficiency. In addition, the additional cable 04 is further required when the connector 02 and the functional circuit 03 are connected. When a quantity of connectors 02 is large, a quantity of cables 04 that need to be used is significantly increased. Consequently, a great difficulty is caused to a cabling design and assembly work of the inverter 01.

In addition, in terms of a mechanical connection, there are also many mountability problems between the connector 02 and the inverter 01. Specifically, a through hole (not shown in the figure) through which the housing 021 of the connector 02 passes is generally disposed on the housing panel 011 of the inverter 01. After the housing 021 passes through the through hole from the outside (the left side in the figure) of the housing panel 011, a nut 05 is thread-connected to the right end of the housing 021, so that the housing panel 011 near the through hole is clamped and fastened between the housing 021 and the nut 05. In the foregoing mounting manner, the housing 021 of the connector 02 needs to be mounted from the outside of the housing panel 011 of the inverter 01. Therefore, the conductive core 022 can be inserted into and fastened to the housing 021 only after the housing 021 of the connector 02 is fixedly connected to the housing panel 011. Otherwise, blocking interference is generated between the cable 04 and the housing panel 011. When the conductive core 022 is inserted into and fastened to the housing 021, a device such as the functional circuit 03 located inside the housing panel 021 may be close to the connector 02. As a result, a mounting tool may be blocked, and a problem such as a mounting difficulty is caused.

In conclusion, when the connector 02 and the inverter 01 are mounted, because of a plurality of mounting processes and a great mounting difficulty, mounting efficiency and connection reliability are significantly reduced.

Therefore, this application provides a connector that is conducive to reducing a mounting difficulty and improving mounting efficiency.

To make the objectives, technical solutions, and advantages of this application clearer, the following further describes this application in detail with reference to the accompanying drawings and specific embodiments.

Terms used in the following embodiments of this application are merely intended to describe specific embodiments, but are not intended to limit this application. As used in this specification and appended claims of this application, the singular expressions "a", "a", "the above", "the" and "this" are not in a particular sense or limitation, and are intended to also include expressions such as "one or more", unless the contrary is clearly indicated in its context. It should be further understood that in the following embodiments of this application, "at least one" and "one or more" refer to one, two, or more. The term "and/or" is used to describe an association relationship between associated objects, and indicates that there may be three relationships. For example, A and/or B may represent a case in which only A exists, both A and B exist, and only B exists, where A and B may be singular or plural. The character "/" generally indicates an "or" relationship between the associated objects.

Reference to "one embodiment" or "some embodiments" described in this specification or the like means that one or more embodiments of this application include a particular feature, structure, or characteristic described in combination with the embodiment. Thus, phrases "in one embodiment", "in some embodiments", "in some other embodiments", "in some additional embodiments", and the like that appear in different parts in this specification do not necessarily mean referring to a same embodiment, but mean "one or more embodiments, but not all embodiments", unless otherwise specifically emphasized. The terms "include", "contain", "have", and their variants all mean "include but are not limited to", unless otherwise specifically emphasized.

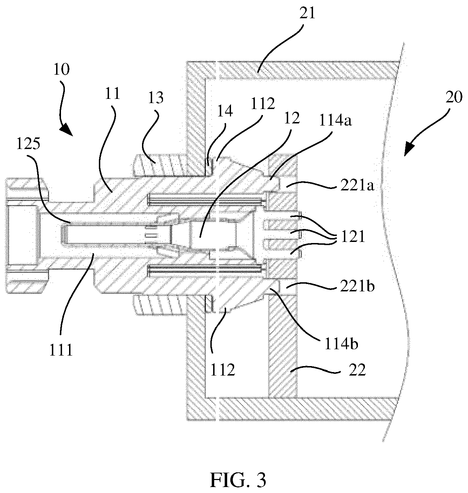

As shown in FIG. 2 and FIG. 3, in an embodiment provided in this application, a connector 10 includes a housing 11, a conductive core 12, and a nut 13. Specifically, as shown in FIG. 3, the housing 11 has a channel 111 that passes through a first end (the right end in the figure) and a second end (the left end in the figure) of the housing 11, and the channel 111 is configured to mount the conductive core 12. A solder leg 121 is disposed on one end (the right end in the figure) of the conductive core 12, and the solder leg 121 protrudes from the first end of the housing 11. The solder leg 121 is configured to be soldered to a circuit board 22, so that the conductive core 12 and the circuit board 22 are electrically and fixedly connected. A through hole (not shown in the figure) is disposed on a housing panel 21 of an electronic device 20, the housing 11 of the connector 10 may pass through the through hole from the right to the left of an inner side of the housing panel 21, and a shoulder 112 on an outer periphery of the housing 11 may abut against the housing panel 21 near the through hole, to implement positioning between the housing 11 and the housing panel 21. The nut 13 is sleeved on the outer periphery of the housing 11 from the left end of the housing 11. When the nut 13 is gradually tightened with the housing 11, the right end of the nut 13 abuts against an outer side of the housing panel 21, and the left end of the shoulder 112 abuts against the inner side of the housing panel 21, so that the housing panel 21 is clamped and fastened between the nut 13 and the shoulder 112, to implement relative fastening between the housing 11 and the housing panel 21. The circuit board 22 inside the electronic device 20 may be electrically connected to another external device or a cable by using the conductive core 12 of the connector 10, to meet a requirement of a quick connection between the electronic device 20 and the another external device or the cable.

When the connector 10 and the electronic device 20 are mounted, the solder leg 121 of the conductive core 12 may be soldered to the circuit board by using a soldering process such as wave soldering. Next, the housing 11 of the connector is sleeved on an outer periphery of the conductive core 12 from the left to the right, so that the conductive core 12 is inserted into the channel 111. Then, the conductive core 12, the housing 11, and the circuit board 22 are mounted in the housing panel 21 as a whole, so that the left end of the housing 11 protrudes from the housing panel 21. Finally, the nut 13 is tightened from the left end of the housing 11 to the right, to implement assembly between the connector 10 and the electronic device 20.

According to the connector 10 provided in this application, the conductive core 12 may be directly soldered to the circuit board 22, so that a connection effect and connection convenience between the conductive core 12 and the circuit board 22 can be improved. After the conductive core 12 is soldered to the circuit board 22, the housing 11 of the connector 10 may be sleeved on and fastened to the outer periphery of the conductive core 12, so that the housing 11 of the connector 10, the conductive core 12, and the circuit board 22 are mounted on the inner side of the housing panel 21 as a whole, and an assembly process can be simplified. When a quantity of connectors 10 is large, this advantage becomes more distinct, so that assembly efficiency can be significantly improved. In addition, the nut 13 may be mounted on the housing 11 of the connector from the outside of the housing panel 21. Therefore, operation space during mounting is abundant.

As shown in FIG. 3, in specific configuration, to improve dust-proof and water-proof performance between the connector 10 and the housing panel 21, a sealing ring 14 may be disposed between the shoulder 112 and the housing panel 21. After the nut 13 is tightened, the sealing ring 14 is tightly clamped between the shoulder 112 and the housing panel 21, to prevent impurities such as dust and moisture from entering the electronic device.

In a specific implementation, the shoulder 112 may have various shape structures. For example, as shown in FIG. 2, in the embodiment provided in this application, the shoulder 112 is configured as a flange structure that extends outwardly around the outer periphery of the housing 11. It may be understood that, in specific configuration, a cross-sectional outer contour of the shoulder 112 may be a circular shape, a rectangular shape, an elliptical shape, or the like. This is not specifically limited in this application.

As shown in FIG. 2, to improve stress performance of the shoulder 112, in the embodiment provided in this application, a reinforcing rib 113 is further disposed on one side of the shoulder 112. When the shoulder 112 closely abuts against the sealing ring 14, the reinforcing rib 113 may effectively improve the stress performance of the shoulder 112, and prevent the shoulder 112 from being significantly deformed or even broken, and may further effectively improve fitness between the shoulder 112 and the sealing ring 14, to help ensure dust-proof and water-proof performance of the connector 10.

As shown in FIG. 3, to improve connection stability between the connector 10 and the circuit board 22, in an embodiment provided in this application, a positioning rod 114a and a positioning rod 114b are disposed on an end face of the first end (the right end in the figure) of the housing 11. Correspondingly, a positioning hole 221a and a positioning hole 221b are disposed on the circuit board 22. The positioning rod 114a may be inserted into the positioning hole 221a, and the positioning rod 114b may be inserted into the positioning hole 221b, to avoid a radial (a direction perpendicular to a central axis of the positioning hole) position offset between the circuit board 22 and the housing 11. Based on the foregoing connection manner of the positioning rod 114a, the positioning rod 114b, the positioning hole 221a, and the positioning hole 221b, connection strength between the housing 11 and the circuit board 22 may be effectively improved, and stress exerted by the circuit board 22 on the solder leg 121 can be further shared. Therefore, connection stability between the conductive core 12 and the circuit board 22 is effectively ensured, and looseness or mutual detachment between the solder leg 121 and the circuit board 22 is avoided. In specific configuration, the positioning rod 114a and the positioning hole 221a may be assembled by using an interference fit, and the positioning rod 114b and the positioning hole 221b may be assembled by using an interference fit, to improve connection stability between the housing 11 and the circuit board 22. In addition, a quantity of positioning rods and a quantity of positioning holes may be adaptively adjusted based on an actual requirement. This is not limited in this application.

In addition, in a specific implementation, to enable the connector to be electrically connected to an external connector, according to the connector provided in the embodiment of this application, the conductive core 12 further includes a second connection portion 125 that is configured to be connected to a conductive structure of the external connector. Specifically, the second connection portion 125 is of a columnar structure and is located at the left end of the conductive core 12, and the conductive structure of the external connector may be sleeved on an outer periphery of the second connection portion 125, so that the second connection portion 125 and the conductive structure of the external connector are connected. After the conductive structure of the external connector is connected to the second connection portion 125, stress may exist between the conductive structure of the external connector and the second connection portion 125. To prevent the stress from being transmitted to the solder leg 121 and therefore affecting connection reliability between the solder leg 121 and the circuit board 22, a flexible portion (not shown in the figure) is further disposed between the second connection portion 125 and the solder leg 121. After the second connection portion 125 is subjected to force of the external connector (specifically, the conductive structure of the connector), the flexible portion may buffer or weaken, through deformation of the flexible portion, the force that is transmitted to the solder leg 121, so that connection reliability between the solder leg 121 and the circuit board 22 can be improved. In a specific implementation, a portion that has a small cross-sectional contour may be disposed between the second connection portion 125 and the solder leg 121. and the portion may form the flexible portion. Alternatively, the second connection portion 125 and the solder leg 121 may be connected by using a cable that has good flexibility. When the second connection portion 125 is subjected to external force, the cable may absorb the external force through deformation of the cable, so that the external force can be effectively reduced or prevented from being transmitted to the solder leg 121. It may be understood that, in another implementation, the force between the second connection portion 125 and the solder leg 121 may be buffered by using another structural form. Details are not described herein.

To improve connection reliability between the connector 10 and the electronic device 20, in the embodiment provided in this application, the conductive core 12 is slidably disposed in the channel 111. In other words, the conductive core 12 may axially (a left-right direction in the figure) slide a preset distance relative to the housing 11, and the distance may be used to compensate for a mounting error that is generated when the connector 10 is mounted on the electronic device 20. Specifically, when a dimension error occurs in any one part in the housing panel 21, the housing 11 of the connector 10, the circuit board 22, and the conductive core 12, the distance may be used to compensate for the dimension error, so that a fault tolerance rate and mounting reliability of the foregoing part during manufacturing and assembly can be improved.

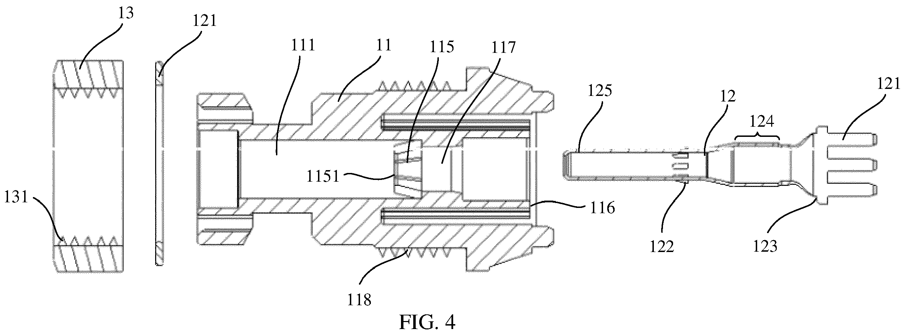

In specific configuration, as shown in FIG. 4, according to this invention, an outwardly-tilted spring 122 is disposed on the outer periphery of the conductive core 12, and a horn-shaped opening 115 is disposed inside the channel 111 of the housing 11. When the conductive core 12 is inserted into the channel 111 from the right to the left, the horn-shaped opening 115 abuts against an outer side of the spring 122, so that the spring 122 is elastically deformed toward an inner side of the conductive core 12. After the conductive core 12 is further pushed to enable the spring 122 to pass through the horn-shaped opening 115, the spring 122 returns to the outwardly-tilted state under an action of elastic force of the spring 122. When the conductive core 12 is pulled to the left, the spring 122 abuts against a left end face 1151 of the horn-shaped opening 115, so that the conductive core 12 can be prevented from being pulled out.

In specific manufacturing, the conductive core 12 may be manufactured by performing processing such as cutting, stamping, and curling on a metal sheet. The spring 122 may be formed by bending a part of the metal sheet outwardly by using a cutting process, and one or more springs 122 may be disposed around an axis of the conductive core 12. This is not specifically limited in this application.

As shown in FIG. 4, to enable the conductive core 12 to axially slide a preset distance relative to the housing 11, according to this invention, first abutment surface 116 that faces the right side is disposed in the channel 111, and a second abutment surface 123 that faces the left side is disposed in the conductive core 12. When the spring 122 of the conductive core 12 just passes through the horn-shaped opening 115 and after the conductive core 12 is further inserted by the preset distance, the first abutment surface 116 abuts against the second abutment surface 123, to prevent the conductive core 12 from further moving in an insertion direction. In other words, the spring 122 abuts against the end face 1151 of the horn-shaped opening 115, and the first abutment surface 116 abuts against the second abutment surface 123, so that the conductive core 12 can only move the preset distance relative to the housing 11. It may be understood that, in another implementation which does not form part of this invention as claimed, another limiting structure may be disposed in each of the conductive core 12 and the channel 111, to position the conductive core 12 in the channel 111, and allow the conductive core 12 to slide the preset distance in the channel 111.

In addition, as shown in FIG. 4, to improve relative position precision between the conductive core 12 and the housing 11, according to this invention, a positioning through hole 117 is disposed in the channel 111 of the housing 11. After the conductive core 12 is inserted into the channel 111, a partial outer peripheral surface 124 of the conductive core 12 and an inner wall of the positioning through hole 117 cooperate with each other, to prevent the conductive core 12 from generating a radial (an up-down direction in the figure) position offset relative to the housing 11. In a specific implementation, the positioning through hole 117 and the partial outer peripheral surface 124 may be configured by using a clearance fit, so that the conductive core 12 can be smoothly inserted into the channel 111, and the conductive core 12 can be effectively prevented from generating a radial position offset relative to the housing 11.

As shown in FIG. 4, in the embodiment provided in this application, the housing 11 of the connector 10 is thread-connected to the nut 13. Specifically, an internal thread 131 is disposed on an inner periphery of the nut 13, and an external thread 118 is disposed on the outer periphery of the housing 11. During mounting, the nut 13 is sleeved on the outer periphery of the housing 11 from the left to the right, and is thread-connected to the housing 11. Therefore, the nut 13 needs to be rotated in this process.

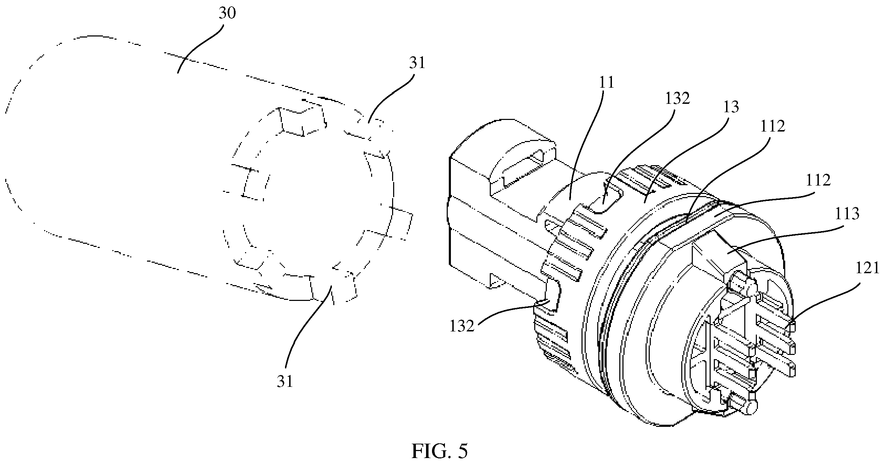

As shown in FIG. 5, to better rotate the nut 13, in the embodiment provided in this application, a tool 30 configured to rotate the nut 13 is further provided. Specifically, six protrusions 31 are disposed on one end (the right end in the figure) of the tool 30, and six grooves 132 (two grooves are shown in the figure) are disposed on an end face of the nut 13 that faces away from the shoulder 112. The protrusion 31 on the tool 30 may be built into the groove 132 on the nut 13. The nut 13 may be rotated by turning the tool 30 by a hand. An operator may easily rotate the nut 13 by using the tool 30, so that disassembly and assembly work between the nut 13 and the housing 11 is implemented. It may be understood that, in another implementation, a protrusion may be disposed on the end face of the nut 13, and a groove may be disposed on one end (the right end in the figure) of the tool 30. Alternatively, other structures that adapt to each other may be disposed on the end face of the nut 13 and one end of the tool 30, so that the tool 30 can act on the end face of the nut 13, and the nut 13 is rotated together with the tool 30.

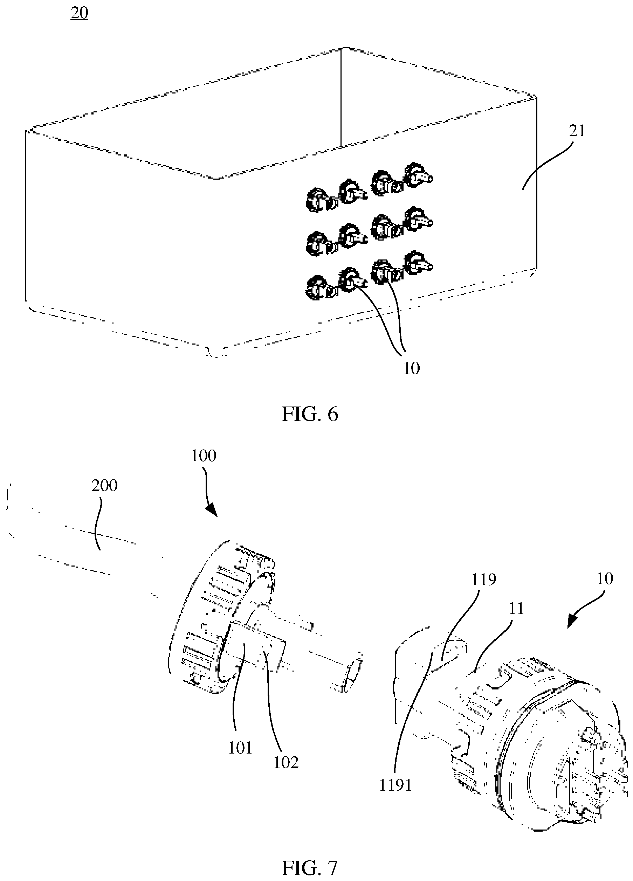

With reference to FIG. 6, when a plurality of connectors 10 are mounted on the housing panel 21, to increase a layout density of the connector 10, a distance between adjacent connectors 10 may be reduced as much as possible. Specifically, because a conventional nut (for example, a hexagonal nut) needs to be rotated by using a conventional wrench, large operation space needs to be reserved on an outer periphery of the nut. Therefore, a large distance needs to be kept between adjacent connectors 10. Consequently, it is not conducive to increasing the layout density of the connector 10. In the embodiment provided in this application, the tool 30 may directly act on an end face of the nut 13 that faces away from the housing panel 21, and does not occupy space on the outer periphery of the nut 13. Therefore, it is conducive to reducing the distance between adjacent connectors 10.

In a specific implementation, the tool 30 may be configured as a cylindrical structure, the nut 13 as a whole may be configured as a ring structure, and an outer diameter of the tool 30 may be less than or equal to an outer diameter of the nut 13, to prevent the tool 30 from touching the space on the outer periphery of the nut 13, and help further reduce the distance between adjacent connectors 10.

It may be understood that, in some other implementations, the tool 30 is not limited to the cylindrical structure. In addition, a rough pattern structure may be disposed on an outer peripheral surface of the tool 30 to increase friction force of the outer peripheral surface, so that the tool can be effectively rotated by the hand. Alternatively, in some implementations, a structure such as a rotating rod perpendicular to an axis of the tool 30 may be disposed on the tool 30, so that the tool 30 can be easily rotated by the hand by using the rotating rod.

In addition, in another implementation, the nut 13 may be replaced with a fastener such as a snap ring. For example, the snap ring may be specifically of a ring structure, and the snap ring may be sleeved on the outer periphery of the housing 11 and connected to the housing 11 by using an interference fit. In other words, the snap ring and the housing 11 may be fixedly connected by using an interference fit. During mounting, an end face of the snap ring that faces the housing panel 21 may closely abut against the housing panel 21 as much as possible, to improve tightness between the housing 11 of the connector and the housing panel 21.

In actual application, the connector 10 not only needs to be connected to the electronic device 20, but also needs to be electrically connected to another electronic device or a cable, so that the electronic device 20 and the another electronic device or the cable are connected. To implement a quick connection, a connector that is configured to adapt to the connector 10 may also be disposed on the another electronic device or the cable.

As shown in FIG. 7, the connector 10 may be connected to a cable 200 by using a connector 100. To facilitate a connection between two connectors, in the embodiment provided in this application, a first connection portion 119 is disposed on the housing 11 of the connector. Specifically, the first connection portion 119 includes a snap hole, and a snap hook 101 is disposed on a housing of the connector 100. When the connector 10 and the connector 100 are connected to each other, the snap hook 101 of the connector 100 passes through the snap hole on the first connection portion 119, and a rear end face 102 of the snap hook 101 abuts against an end face 1191 of the snap hole 119, to prevent the connector 10 and the connector 100 from being detached from each other, so that the connector 10 and the connector 110 are connected. In specific configuration, a PV connector currently well-known in the market may be used as the connector 100. Correspondingly, the first connection portion 119 of the connector 10 may be correspondingly adjusted based on a specific type of the connector 100.

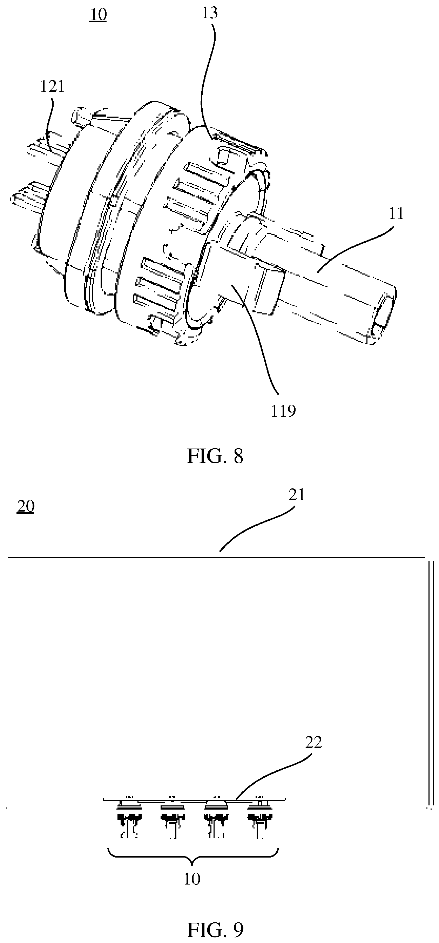

For example, when a snap hole structure (in other words, the foregoing snap hook is replaced with the snap hole) is disposed on the connector 100, as shown in FIG. 8, the first connection portion 119 of the connector 10 may be configured as a snap hook structure.

In addition, as shown in FIG. 9, an embodiment of this application further provides an electronic device 20, including a housing panel 21 and a circuit board 22. The housing panel 21 encloses mounting space that is used to accommodate a device such as the circuit board 22. A plurality of the connectors 10 are further mounted in the electronic device 20, so that the electronic device 20 (or the circuit board 22) can be connected to another device or a cable by using the connector 10.

In specific configuration, the housing panel 11 may have a plurality of structure compositions.

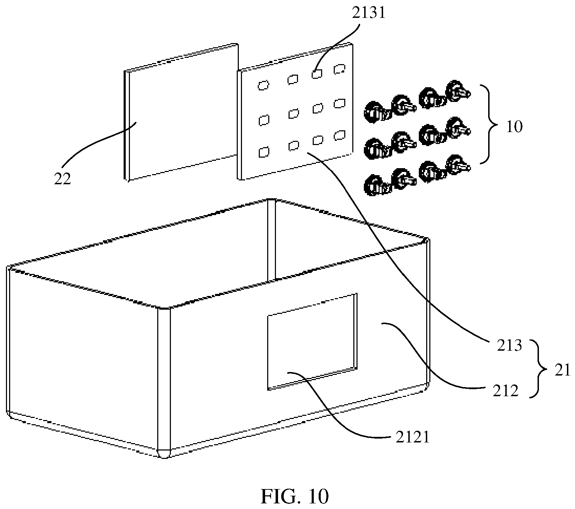

For example, as shown in FIG. 10, in the embodiment provided in this application, the housing panel 21 includes a body structure 212 and a mounting plate 213. A hole 2121 is disposed on the body structure 212, and a through hole 2131 through which the connector 10 passes is disposed on the mounting plate 213. The mounting plate 213 may be mounted on the body structure 212, and seal the hole 2121. When the connector 10 is mounted on the housing panel 21, the plurality of connectors 10 may be first assembled on the mounting plate 213. Next, the connectors 10 are soldered to the circuit board 22. Finally, the mounting plate 213, the circuit board 22, and the plurality of connectors 10 as a whole are fastened to an inner side of the body structure 212 to seal the hole 2121. In a specific implementation, the mounting plate 213 and the body structure 212 may be fixedly connected to each other through soldering or bonding or by using a screw and the like. Alternatively, in some implementations, the body structure 212 and the mounting plate 213 may be an integral structure. For example, the housing panel 21 may be molded through die-casting molding, stamping molding, or the like, to manufacture the body structure 212 and the mounting plate 213 into an integrally-formed structure member.

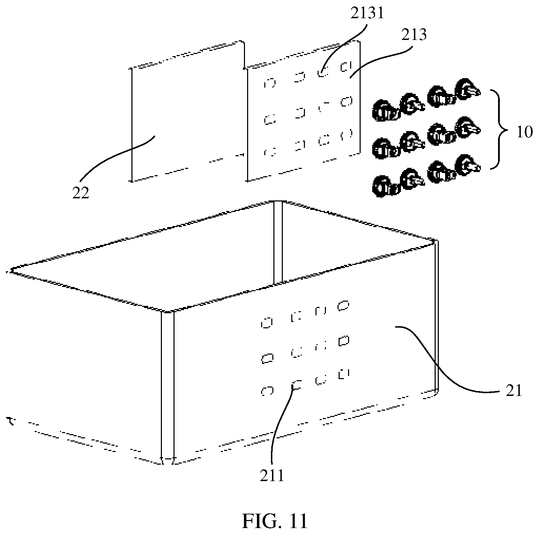

In addition, as shown in FIG. 11, in some implementations, the mounting plate 213 may also be used as a tool. Specifically, before the plurality of connectors 10 are soldered to the circuit board 22, the plurality of connectors 10 may be first fastened to the mounting plate 213, to effectively position layout positions of the plurality of connectors 10, and facilitate soldering between the connector 10 and the circuit board 22. After the connectors 10 are soldered to the circuit board 20, the mounting plate 213 may be removed, and then an integral structure including the connectors 10 and the circuit board 22 is mounted on the housing panel 21. A plurality of through holes 211 are disposed on the housing panel 21, and the plurality of connectors 10 may respectively pass through corresponding through holes 211.

In actual application, the electronic device 20 may have various specific types. For example, the electronic device 20 may be an inverter, a cabinet, or the like. The inverter is used as an example. The inverter is a converter that converts direct current power into constant-frequency and constant-voltage or variable-frequency and variable-voltage alternating current power. The inverter may include a functional circuit such as a filter circuit, a measurement circuit, and an inverter circuit, and the foregoing functional circuit may be integrated into the circuit board 22. When the inverter is applied to a photovoltaic system, the circuit board 22 of the inverter may be electrically connected to a photovoltaic battery in the photovoltaic system by using the connector 10. Direct current power in the photovoltaic battery may be processed by using the functional circuit such as a filter circuit, a measurement circuit, and an inverter circuit that are integrated into the circuit board 22, so that the direct current power is converted into alternating current power, and the alternating current power is transferred to a user end or a power grid.

It may be understood that, in actual application, a disposition quantity of connectors 10 and the layout positions thereof may be adaptively adjusted based on an actual situation. This is not specifically limited in this application.

The foregoing descriptions are merely specific implementations of this application, but are not intended to limit the protection scope of this application. Therefore, the protection scope of this application shall be subject to the protection scope of the claims.

## Claims

1. A connector (10, 100, 110), configured to be mounted on a panel (11), wherein the connector (10, 100, 110) comprises:
a housing (11, 21) having a channel (111) that passes through a first end and a second end of the housing (11, 21); and
a conductive core (12, 22) disposed in the channel (111), wherein
a solder leg (121) is disposed on one end of the conductive core (12, 22), and the solder leg (121) protrudes from the first end of the housing (11, 21), and is configured to be soldered to a circuit board (20, 22);
a fastening structure (13, 112), configured to fasten the housing (11, 21) to the panel; and
**characterized in that** an outwardly-tilted spring (122) is disposed on the outer periphery of the conductive core (12), and a horn-shaped opening (115) is disposed inside the channel (111) of the housing (11);
wherein a first abutment surface (116) facing an opposite direction from an insertion direction in which the conductive core (12) is inserted into the channel (111) is disposed in the channel (111) and a second abutment surface (123) facing the insertion direction is disposed in the conductive core (12);
wherein a positioning through hole (117) is disposed in the channel (111) of the housing (11) and after the conductive core (12) is inserted into the channel (111) an outer peripheral surface (124) of the conductive core (12) and an inner wall of the positioning through hole (117) cooperate with each other; and
wherein, when the conductive core (12) is inserted into the channel (111), the horn-shaped opening (115) abuts against an outer side of the outwardly-tilted spring (122), so that the outwardly-tilted spring (122) is elastically deformed toward an inner side of the conductive core (12),
after the conductive core (12) is further pushed to enable the outwardly-tilted spring (122) to pass through the horn-shaped opening (115), the outwardly-tilted spring (122) returns to an outwardly-tilted state under an action of elastic force of the outwardly-tilted spring (122) and
when the conductive core (12) is pulled, the outwardly-tilted spring (122) abuts against an end face (1151) of the horn-shaped opening (115), so that the conductive core (12) is prevented from being pulled out.

2. The connector (10, 100, 110) according to claim 1, wherein the fastening structure comprises a nut (13) and a shoulder (112); and
the nut (13) is fastened to an outer periphery of the housing (11, 21), the shoulder (112) is disposed on the outer periphery of the housing (11, 21), and a gap used to clamp the panel is formed between the nut (13) and the shoulder (112).

3. The connector (10, 100, 110) according to claim 2, wherein the fastening structure (13, 112) comprises a nut (13), and a groove (132) or a protrusion (31) is disposed on an end face (102 1191) of the nut (13); and
the end face (102 1191) is an end face (102 1191) that faces away from the shoulder (112).

4. The connector (10, 100, 110) according to claim 3, wherein a plurality of grooves (132) or protrusions (31) are disposed, and the plurality of grooves (132) or protrusions (31) are evenly distributed around an axis of the nut (13).

5. The connector (10, 100, 110) according to claim 3 or 4, wherein the connector (10, 100, 110) further comprises a tool (30), and the tool (30) is configured to rotate the nut (13); and
a protrusion (31) or a groove (132) is disposed on the tool (30), and the protrusion (31) or the groove (132) is configured to be inserted into the groove (132) or the protrusion (31) on the nut (13).

6. The connector (10, 100, 110) according to claim 5, wherein the tool (30) is constructed as a cylindrical structure, and the protrusion (31) or the groove (132) on the tool (30) is disposed on one end face (102 1191) of the cylindrical structure.

7. The connector (10, 100, 110) according to any one of claims 2 to 6, wherein the shoulder (112) is configured as a flange that extends around the outer periphery of the housing (11, 21).

8. The connector (10, 100, 110) according to any one of claims 2 to 7, wherein the fastening structure (13, 112) is farther away from the first end of the housing (11, 21) than the shoulder (112).

9. The connector (10, 100, 110) according to any one of claims 1 to 8, wherein the conductive core (12, 22) is slidably disposed in the channel (111).

10. The connector (10, 100, 110) according to any one of claims 1 to 9, wherein a positioning rod (114a, 114b) is disposed on an end face (102 1191) of the first end of the housing (11, 21), and a positioning hole (221a, 221b) is disposed on the circuit board (20, 22); and
the positioning rod (114a, 114b) is inserted into the positioning hole (221a, 221b).

11. The connector (10, 100, 110) according to claim 10, wherein the positioning rod (114a, 114b) and the positioning hole (221a, 221b) are connected by using an interference fit.

12. The connector (10, 100, 110) according to any one of claims 1 to 11, wherein a first connection portion (119) is disposed on the second end of the housing (11, 21), and the first connection portion (119) is configured to be connected to another connector (10, 100, 110).

13. The connector (10, 100, 110) according to claim 12, wherein the first connection portion (119) is configured as a snap hook (101) or a snap hole (119).

14. The connector (10, 100, 110) according to any one of claims 1 to 13, wherein a second connection portion (125) is disposed on the conductive core (12, 22), and the second connection portion (125) is configured to be connected to the another connector (10, 100, 110); and
a flexible portion is further disposed on the conductive core (12, 22), the flexible portion is located between the second connection portion (125) and the solder leg (121), and the flexible portion is configured to buffer force between the second connection portion (125) and the solder leg (121).

15. An electronic device (20), comprising a housing panel (11, 21) and a circuit board (20, 22), and further comprising the connector (10, 100, 110) according to any one of claims 1 to 14, wherein
a through hole (211, 2131) is disposed on the housing panel (11, 21), and a housing (11, 21) of the connector (10, 100, 110) passes through the through hole (211, 2131); and
the circuit board (20, 22) and a first end of the housing (11, 21) of the connector (10, 100, 110) are located on a same side of the housing panel (11, 21), and a second end of the housing (11, 21) is located on the other side of the housing panel (11, 21).

## Patentansprüche

1. Verbinder (10, 100, 110), der konfiguriert ist, um auf einem Feld (11) montiert zu werden, wobei der Verbinder (10, 100, 110) umfasst:
ein Gehäuse (11, 21), das einen Kanal (111), der durch ein erstes Ende und ein zweites Ende des Gehäuses (11, 21) passiert, aufweist; und
einen leitfähigen Kern (12, 22), der in dem Kanal (111) angeordnet ist, wobei
ein Lötbein (121) auf einem Ende des leitfähigen Kerns (12, 22) angeordnet ist und das Lötbein (121) von dem ersten Ende des Gehäuses (11, 21) vorsteht und konfiguriert ist, um an eine Leiterplatte (20, 22) gelötet zu werden;
eine Befestigungsstruktur (13, 112), die konfiguriert ist, um das Gehäuse (11, 21) an dem Feld zu befestigen; und **dadurch gekennzeichnet, dass**
eine nach außen geneigte Feder (122) auf dem Außenumfang des leitfähigen Kerns (12) angeordnet ist und eine hornförmige Öffnung (115) im Inneren des Kanals (111) des Gehäuses (11) angeordnet ist;
wobei eine erste Anlageoberfläche (116), die in eine entgegengesetzte Richtung von einer Einsetzrichtung weist, in der der leitfähige Kern (12) in den Kanal (111) eingesetzt ist, in dem Kanal (111) angeordnet ist und eine zweite Anlageoberfläche (123), die in die Einsetzrichtung weist, in dem leitfähigen Kern (12) angeordnet ist;
wobei ein Positionierungsdurchgangsloch (117) in dem Kanal (111) des Gehäuses (11) angeordnet ist und nachdem der leitfähige Kern (12) in den Kanal (111) eingesetzt ist, eine Außenumfangsoberfläche (124) des leitfähigen Kerns (12) und eine Innenwand des Positionierungsdurchgangslochs (117) miteinander zusammenwirken; und
wobei, wenn der leitfähige Kern (12) in den Kanal (111) eingesetzt ist, die hornförmige Öffnung (115) an einer Außenseite der nach außen geneigten Feder (122) anliegt,
sodass die nach außen geneigte Feder (122) zu einer Innenseite des leitfähigen Kerns (12) hin elastisch verformt ist,
nachdem der leitfähige Kern (12) ferner gedrückt ist, um der nach außen geneigten Feder (122) zu ermöglichen, durch die hornförmige Öffnung (115) zu passieren, die nach außen geneigte Feder (122) in einen nach außen geneigten Zustand, unter einer Wirkung von elastischer Kraft der nach außen geneigten Feder (122), zurückkehrt, und wenn an dem leitfähigen Kern (12) gezogen wird, die nach außen geneigte Feder (122) an einer Endfläche (1151) der hornförmigen Öffnung (115) anliegt, sodass verhindert wird, dass der leitfähige Kern (12) herausgezogen wird.

2. Verbinder (10, 100, 110) nach Anspruch 1, wobei die Befestigungsstruktur eine Mutter (13) und eine Schulter (112) umfasst; und
die Mutter (13) an einem Außenumfang des Gehäuses (11, 21) befestigt ist, die Schulter (112) auf dem Außenumfang des Gehäuses (11, 21) angeordnet ist und ein Spalt, der verwendet wird, um das Feld festzuklemmen, zwischen der Mutter (13) und der Schulter (112) ausgebildet ist.

3. Verbinder (10, 100, 110) nach Anspruch 2, wobei die Befestigungsstruktur (13, 112) eine Mutter (13) umfasst und eine Nut (132) oder ein Vorsprung (31) auf einer Endfläche (102 1191) der Mutter (13) angeordnet ist; und
die Endfläche (102 1191) eine Endfläche (102 1191), die von der Schulter (112) weg weist, ist.

4. Verbinder (10, 100, 110) nach Anspruch 3, wobei eine Vielzahl von Nuten (132) oder Vorsprüngen (31) angeordnet ist und die Vielzahl von Nuten (132) oder Vorsprüngen (31) gleichmäßig um eine Achse der Mutter (13) herum verteilt ist.

5. Verbinder (10, 100, 110) nach Anspruch 3 oder 4, wobei der Verbinder (10, 100, 110) ferner ein Werkzeug (30) umfasst und das Werkzeug (30) konfiguriert ist, um die Mutter (13) zu drehen; und
ein Vorsprung (31) oder eine Nut (132) auf dem Werkzeug (30) angeordnet ist und der Vorsprung (31) oder die Nut (132) konfiguriert ist, um in die Nut (132) oder den Vorsprung (31) auf der Mutter (13) eingesetzt zu werden.

6. Verbinder (10, 100, 110) nach Anspruch 5, wobei das Werkzeug (30) als eine zylindrische Struktur ausgebildet ist und der Vorsprung (31) oder die Nut (132) auf dem Werkzeug (30) auf einer Endfläche (102 1191) der zylindrischen Struktur angeordnet ist.

7. Verbinder (10, 100, 110) nach einem der Ansprüche 2 bis 6, wobei die Schulter (112) als ein Flansch, der sich um den Außenumfang des Gehäuses (11, 21) herum erstreckt, konfiguriert ist.

8. Verbinder (10, 100, 110) nach einem der Ansprüche 2 bis 7, wobei die Befestigungsstruktur (13, 112) weiter von dem ersten Ende des Gehäuses (11, 21) als die Schulter (112) entfernt ist.

9. Verbinder (10, 100, 110) nach einem der Ansprüche 1 bis 8, wobei der leitfähige Kern (12, 22) in dem Kanal (111) verschiebbar angeordnet ist.

10. Verbinder (10, 100, 110) nach einem der Ansprüche 1 bis 9, wobei eine Positionierungsstange (114a, 114b) auf einer Endfläche (102 1191) des ersten Endes des Gehäuses (11, 21) angeordnet ist und ein Positionierungsloch (221a, 221b) auf der Leiterplatte (20, 22) angeordnet ist; und
die Positionierungsstange (114a, 114b) in das Positionierungsloch (221a, 221b) eingesetzt wird.

11. Verbinder (10, 100, 110) nach Anspruch 10, wobei die Positionierungsstange (114a, 114b) und das Positionierungsloch (221a, 221b) durch Verwenden einer Presspassung verbunden sind.

12. Verbinder (10, 100, 110) nach einem der Ansprüche 1 bis 11, wobei ein erster Verbindungsabschnitt (119) auf dem zweiten Ende des Gehäuses (11, 21) angeordnet ist und der erste Verbindungsabschnitt (119) konfiguriert ist, um mit einem anderen Verbinder (10, 100, 110) verbunden zu werden.

13. Verbinder (10, 100, 110) nach Anspruch 12, wobei der erste Verbindungsabschnitt (119) als ein Schnapphaken (101) oder ein Schnapploch (119) konfiguriert ist.

14. Verbinder (10, 100, 110) nach einem der Ansprüche 1 bis 13, wobei ein zweiter Verbindungsabschnitt (125) auf dem leitfähigen Kern (12, 22) angeordnet ist und der zweite Verbindungsabschnitt (125) konfiguriert ist, um mit dem anderen Verbinder (10, 100, 110) verbunden zu werden; und
ein flexibler Abschnitt ferner auf dem leitfähigen Kern (12, 22) angeordnet ist, sich der flexible Abschnitt zwischen dem zweiten Verbindungsabschnitt (125) und dem Lötbein (121) befindet und der flexible Abschnitt konfiguriert ist, um Kraft zwischen dem zweiten Verbindungsabschnitt (125) und dem Lötbein (121) zu puffern.

15. Elektronische Vorrichtung (20), die ein Gehäusefeld (11, 21) und eine Leiterplatte (20, 22) umfasst, und ferner den Verbinder (10, 100, 110) nach einem der Ansprüche 1 bis 14 umfasst, wobei
ein Durchgangsloch (211, 2131) auf dem Gehäusefeld (11, 21) angeordnet ist und ein Gehäuse (11, 21) des Verbinders (10, 100, 110) durch das Durchgangsloch (211, 2131) passiert; und
sich die Leiterplatte (20, 22) und ein erstes Ende des Gehäuses (11, 21) des Verbinders (10, 100, 110) auf einer gleichen Seite des Gehäusefelds (11, 21) befinden und sich ein zweites Ende des Gehäuses (11, 21) auf der anderen Seite des Gehäusefelds (11, 21) befindet.

## Revendications

1. Connecteur (10, 100, 110), conçu pour être monté sur un panneau (11), dans lequel le connecteur (10, 100, 110) comprend :
un boîtier (11, 21) ayant un canal (111) qui traverse une première extrémité et une seconde extrémité du boîtier (11, 21) ; et
un noyau conducteur (12, 22) disposé dans le canal (111), dans lequel une patte de soudure (121) est disposée sur une extrémité du noyau conducteur (12, 22), et la patte de soudure (121) fait saillie de la première extrémité du boîtier (11, 21), et est conçue pour être soudée à une carte de circuit imprimé (20, 22) ;
une structure de fixation (13, 112), conçue pour fixer le boîtier (11, 21) au panneau ; et
**caractérisé en ce que**
un ressort incliné vers l'extérieur (122) est disposé sur la périphérie extérieure du noyau conducteur (12), et une ouverture en forme de corne (115) est disposée à l'intérieur du canal (111) du boîtier (11) ;
dans lequel une première surface de butée (116) orientée dans une direction opposée à une direction d'insertion dans laquelle le noyau conducteur (12) est inséré dans le canal (111) est disposée dans le canal (111) et une seconde surface de butée (123) orientée dans la direction d'insertion est disposée dans le noyau conducteur (12) ;
dans lequel un trou traversant de positionnement (117) est disposé dans le canal (111) du boîtier (11) et après l'insertion du noyau conducteur (12) dans le canal (111), une surface périphérique extérieure (124) du noyau conducteur (12) et une paroi intérieure du trou traversant de positionnement (117) coopèrent l'une avec l'autre ; et
dans lequel, lorsque le noyau conducteur (12) est inséré dans le canal (111),
l'ouverture en forme de corne (115) vient en butée contre un côté extérieur du ressort incliné vers l'extérieur (122), de sorte que le ressort incliné vers l'extérieur (122) est déformé de manière élastique vers un côté intérieur du noyau conducteur (12),
après que le noyau conducteur (12) a été poussé davantage pour permettre au ressort incliné vers l'extérieur (122) de traverser l'ouverture en forme de corne (115), le ressort incliné vers l'extérieur (122) revient à un état incliné vers l'extérieur sous une action de force élastique du ressort incliné vers l'extérieur (122) et lorsque le noyau conducteur (12) est tiré, le ressort incliné vers l'extérieur (122) vient en butée contre une face d'extrémité (1151) de l'ouverture en forme de corne (115), de sorte que le noyau conducteur (12) ne peut pas être retiré.

2. Connecteur (10, 100, 110) selon la revendication 1, dans lequel la structure de fixation comprend un écrou (13) et un épaulement (112) ; et
l'écrou (13) est fixé à une périphérie extérieure du boîtier (11, 21), l'épaulement (112) est disposé sur la périphérie extérieure du boîtier (11, 21), et un espace utilisé pour serrer le panneau est formé entre l'écrou (13) et l'épaulement (112).

3. Connecteur (10, 100, 110) selon la revendication 2, dans lequel la structure de fixation (13, 112) comprend un écrou (13), et une rainure (132) ou une saillie (31) est disposée sur une face d'extrémité (102 1191) de l'écrou (13) ; et
la face d'extrémité (102 1191) est une face d'extrémité (102 1191) qui fait face à l'opposé de l'épaulement (112).

4. Connecteur (10, 100, 110) selon la revendication 3, dans lequel une pluralité de rainures (132) ou de saillies (31) sont disposées, et la pluralité de rainures (132) ou de saillies (31) sont uniformément réparties autour d'un axe de l'écrou (13).

5. Connecteur (10, 100, 110) selon la revendication 3 ou 4, dans lequel le connecteur (10, 100, 110) comprend en outre un outil (30), et l'outil (30) est conçu pour faire tourner l'écrou (13) ; et
une saillie (31) ou une rainure (132) est disposée sur l'outil (30), et la saillie (31) ou la rainure (132) est conçue pour être insérée dans la rainure (132) ou la saillie (31) de l'écrou (13).

6. Connecteur (10, 100, 110) selon la revendication 5, dans lequel l'outil (30) est construit comme une structure cylindrique, et la saillie (31) ou la rainure (132) sur l'outil (30) est disposée sur une face d'extrémité (102 1191) de la structure cylindrique.

7. Connecteur (10, 100, 110) selon l'une quelconque des revendications 2 à 6, dans lequel l'épaulement (112) est conçu comme une bride qui s'étend autour de la périphérie extérieure du boîtier (11, 21).

8. Connecteur (10, 100, 110) selon l'une quelconque des revendications 2 à 7, dans lequel la structure de fixation (13, 112) est plus éloignée de la première extrémité du boîtier (11, 21) que l'épaulement (112).

9. Connecteur (10, 100, 110) selon l'une quelconque des revendications 1 à 8, dans lequel le noyau conducteur (12, 22) est disposé de manière coulissante dans le canal (111).

10. Connecteur (10, 100, 110) selon l'une quelconque des revendications 1 à 9, dans lequel une tige de positionnement (114a, 114b) est disposée sur une face d'extrémité (102 1191) de la première extrémité du boîtier (11, 21), et un trou de positionnement (221a, 221b) est disposé sur la carte de circuit imprimé (20, 22) ; et
la tige de positionnement (114a, 114b) est insérée dans le trou de positionnement (221a, 221b).

11. Connecteur (10, 100, 110) selon la revendication 10, dans lequel la tige de positionnement (114a, 114b) et le trou de positionnement (221a, 221b) sont reliés en utilisant un ajustement serré.

12. Connecteur (10, 100, 110) selon l'une quelconque des revendications 1 à 11, dans lequel une première partie de liaison (119) est disposée sur la seconde extrémité du boîtier (11, 21), et la première partie de liaison (119) est conçue pour être reliée à un autre connecteur (10, 100, 110).

13. Connecteur (110, 100, 110) selon la revendication 12, dans lequel la première partie de liaison (119) est conçue comme un mousqueton (101) ou un trou d'encliquetage (119).

14. Connecteur (10, 100, 110) selon l'une quelconque des revendications 1 à 13, dans lequel une seconde partie de liaison (125) est disposée sur le noyau conducteur (12, 22), et la seconde partie de liaison (125) est conçue pour être reliée à un autre connecteur (10, 100, 110) ; et
une partie flexible est en outre disposée sur le noyau conducteur (12, 22), la partie flexible est située entre la seconde partie de liaison (125) et la patte de soudure (121), et la partie flexible est conçue pour amortir une force entre la seconde partie de liaison (125) et la patte de soudure (121).

15. Dispositif électronique (20), comprenant un panneau de boîtier (11, 21) et une carte de circuit imprimé (20, 22), et comprenant en outre le connecteur (10, 100, 110) selon l'une quelconque des revendications 1 à 14, dans lequel
un trou traversant (211, 2131) est disposé sur le panneau de boîtier (11, 21), et un boîtier (11, 21) du connecteur (10, 100, 110) traverse le trou traversant (211, 2131) ; et la carte de circuit imprimé (20, 22) et une première extrémité du boîtier (11, 21) du connecteur (10, 100, 110) sont situées d'un même côté du panneau de boîtier (11, 21), et une seconde extrémité du boîtier (11, 21) est située de l'autre côté du panneau de boîtier (11, 21).
